# EUROPEAN PATENT APPLICATION

(11) **EP 4 220 829 A1**
(43) Date of publication of application: **02.08.2023**
(21) Application number: 22153888.7
(22) Date of filing: 28.01.2022
(51) Int. Cl.: H01M 50/204, H01M 50/271, H01M 50/289

(54) **BATTERY MODULE WITH SEALED CHAMBER**

(71) Applicant: Rimac Automobiles Ltd., 10431 Sveta Nedelja (HR)
(72) Inventor: Kisic, Daniel, 10450 Jastrebarsko (HR)
(74) Representative: Hoffmann Eitle

(57) **Abstract**

The present invention relates to a battery module and a method of manufacturing a battery module. The battery module comprising: housing having a bottom side and an upper side; a plurality of battery cells each comprising a terminal end; a middle housing divider configured to divide the housing in an upper chamber and a bottom chamber, the middle housing divider comprising a plurality of cell openings configured to receive a respective battery cell of the plurality of battery cells so that a first portion of the battery cell is in the upper chamber and a second portion of the battery cell is in the bottom chamber. The plurality of battery cells is adhered to the middle housing divider so as to seal the upper and the bottom chamber and fix the battery cells.

## Description

### Technical field

The present invention relates to the field of battery modules and battery packs.

### Background

In the art battery modules comprising a plurality of battery cells, or battery cells units, are known. Typically, a single battery module may comprise tens to hundreds or even thousands of battery cells which are held in place by a battery cell holder and densely packed within the battery module. To this end, the battery cell holder may have a plurality of apertures for receiving respective battery cells.

Several battery modules may also be electrically connected one with another to form a battery pack.

Battery modules, and therefore battery packs, find applications in a wide spectrum of technologies such as in the field of electromobility. For instance, their use in motor vehicles is well-known both in (fully) electric vehicles and hybrid vehicles for propelling the vehicle. Thus, battery modules, contribute, amongst other things, to bring forward renewable energy use and hence reduce reliance on fuel technology.

Further taking the field of electromobility as an example, a modular design of the battery pack is advantageous since it enables to optimize the space usage of the vehicles the battery module is fitted in. Battery modules of different shapes and size may in fact be arranged and configured differently within the vehicle.

However, battery cells usually produce a considerable amount of heat and need therefore to be cooled down. Moreover, for instance, in cold days, it may also be beneficial to warm up the battery module, when starting the vehicle which includes the battery module. Temperature control is relevant not only to maintain satisfying performance of the battery module over time but also to decrease its degradation over time and hence increase the life expectancy of the battery module. It also allows to maintain satisfying efficiency. With proper temperature control, the vehicle may be able to travel longer distances with a same amount of energy spent by the battery. The required temperature regulation can be achieved, for instance, by having a cooling fluid (also referred to as coolant, or battery coolant) flowing through the battery module. The fluid may, for example, be a liquid.

In such a liquid cooled battery module, it is advantageous to have a separation of the battery module into different chambers (also referred to as portions, compartments or sections) so as to precisely direct the battery coolant flow and to optimize the cooling performance by having the battery coolant following a predetermined, flow path.

A battery cell holder can be used to divide the battery module in two (or more) chambers, for instance a first chamber and a second chamber along the elongation direction of the battery cell, the axial direction. Incidentally, the battery cell holder may also be referred to as middle housing divider, since the battery cells are housed inside a battery module housing.

While the apertures of the battery cell holder are sized to the size of the battery cell there is usually clearance, also called gap, between a given battery cell and battery cell holder, which is required for assembly purposes. Particularly, the clearance is needed for allowing the insertion of the battery cell in the battery cell holder.

This clearance, however, may cause crossflow of the battery coolant through the opening of the battery cell holder. Crossflow is a phenomenon wherein the battery coolant flows from a part of the module to another part of the module, via the gap without flowing along the predetermined path conceived to optimize the cooling performance. For instance, the battery coolant flows from an upper portion of the battery module to a lower portion of the battery module, or vice versa. This negatively affects the benefits of separating the battery module into sections and reduces the cooling performance of the battery cooling system.

Generally speaking, every deviation from the predetermined path may negatively influence the cooling performances of the cooling system of the battery module.

Therefore, if the chambers of the battery module are not properly sealed, there may be also a deterioration of the battery module performances and/or of the cooling performances of the cooling system. This in turn may lead to a decrease of the battery module and battery cell cycle life.

### Summary of the invention

There is a necessity in the art to ensure a proper cooling of the battery module by providing separated sealed chambers of the battery module. Moreover, fixing the battery cells in the battery module ensures stability of the battery module itself.

A merit of the inventors of the present invention lies in having recognized that it is possible to employ a same adhesive material as sealing solution and as battery cells fixing solution. The adhesive material may be for instance potting material. In this manner it is possible, for instance, to create different sealed chambers in the battery module (an upper and a bottom chamber). Moreover, since adhering the battery cells on the middle housing divider with adhesive material also results in fixing the battery cells according to the invention is also possible to simplify the manufacture of the battery module. In fact, with a single manufacture step it is possible to provide both fixation and sealing at the same time.

According to an aspect of the invention there is provided a battery module comprising:
- a housing having a bottom side and an upper side;
- a plurality of battery cells each comprising a terminal end;
- a middle housing divider configured to divide the housing in an upper chamber and a bottom chamber, the middle housing divider comprising a plurality of cell openings configured to receive a respective battery cell of the plurality of battery cells so that a first portion of the battery cell is in the upper chamber and a second portion of the battery cell is in the bottom chamber;
wherein the plurality of battery cells is adhered to the middle housing divider so as to seal the upper and the bottom chamber and fix the battery cells.

According to another aspect of the invention there is provided a method of manufacturing a battery module comprising the steps of:
providing a housing having a bottom side and an upper side;
providing a plurality of battery cells each comprising a terminal end;
providing a middle housing divider in the housing to divide the housing in an upper chamber and a bottom chamber, the middle housing divider comprising a plurality of cell openings configured to receive a respective battery cell of the plurality of battery cells so that a first portion of the battery cell is in the upper chamber and a second portion of the battery cell is in the bottom chamber;
adhering the plurality of battery cell to the middle housing divider so as to seal the upper and the bottom chamber and fix the battery cells.

### Brief description of the drawings

FIG. 1A shows a schematic configuration of a battery cell according to the known art.
FIG. 1B shows a schematic configuration of a plurality of battery cells arranged in a battery module according to an embodiment of the present disclosure.
FIG. 1C shows a schematic configuration of a plurality of battery cells arranged in a battery module according to an embodiment of the present disclosure wherein a battery coolant is also present.
FIG. 2 shows a schematic configuration of a middle housing divider including a plurality of battery cells according to an embodiment of the present disclosure.
FIG. 3 shows a schematic configuration of a middle housing divider including a plurality of battery cells according to another embodiment of the present disclosure.
Fig. 4 shows a method of manufacturing a battery module according to an embodiment of the present disclosure.

### Detailed description of the invention

The present invention shall now be described in conjunction with specific embodiments. These specific embodiments serve to provide the skilled person with a better understanding of the concepts underlying the present invention but are not intended to in any way restrict the scope of the invention, which is defined by appended independent claim. Particularly advantageous configurations are defined in the dependent claims. Embodiments described independently throughout the description can be combined to form further embodiments to the extent that said particular embodiments are not mutually exclusive.

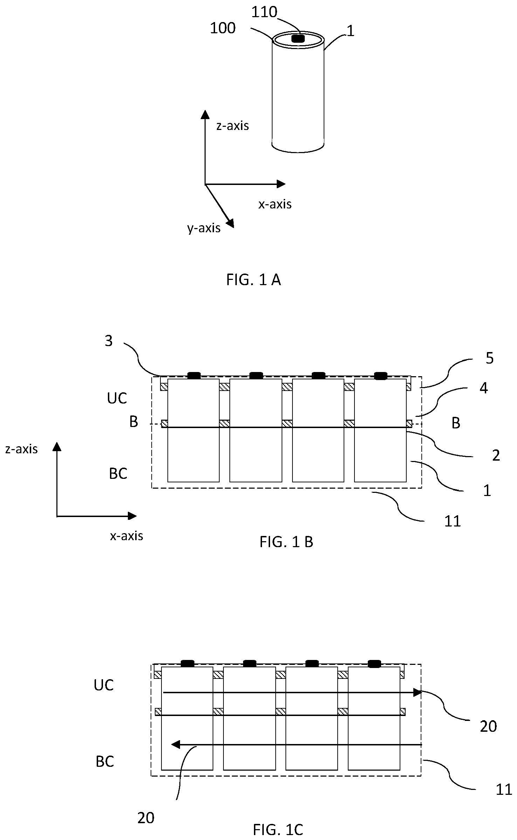

FIG. 1A shows a schematic configuration of a battery cell 1 according to the known art. The battery cell may have a cylindrical shape defining an axial direction, i.e. z-axis, and may have a battery cell terminal, that is a battery cell electrode, on one side. As an example, FIG. 1 shows a case wherein both the battery cell terminals, i.e. the positive battery cell terminal 110 and the negative battery cell terminal 100, are placed on a same side of the battery cell. A side of the battery cell comprising the battery cell terminal may be referred to as a terminal end of the battery cell. The negative terminal 100 may be, for instance, the whole body of the cell except the portion corresponding to the positive terminal, i.e. reference 110. This may be the case, for instance, for cylindrical battery cells.

The battery cell according to the present disclosure is not limited to the cylindrical shape and different shapes are possible. For instance, conical or trapezoidal battery cells as well as more generally battery cells elongated along an axial direction can also be used. Moreover, the battery cells according to the present disclosure may also have terminals 100 and 110 on different sides of the battery cell.

FIG. 1B shows a battery module according to an embodiment of the present disclosure. More in details, the battery module according to the present disclosure comprises a housing 11, a plurality of battery cells 1, a middle housing divider 2 and a top cover 3. The top cover 3 can also be referred to as top barrier or top layer.

The housing 11 has a bottom side and an upper side, which are defined by the elongation direction of the battery cell, that is, along the z-axis.

The middle housing divider 2 is configured to divide the housing 11 in an upper chamber and a bottom chamber along the z-axis. The middle housing divider comprises a plurality of cell openings for receiving a respective battery cell of the plurality of battery cells. In this manner a first portion of the battery cell is in the upper chamber UC and a second portion of the battery cell is in the bottom chamber BC. The first portion of the battery cell and the second portion of the battery cell may be of equal length but do not need to. For instance, the first portion of the battery cell may be longer than the second portion of the battery cell. Alternatively, the second portion of the battery cell may be longer than the first portion of the battery cell. Moreover, the middle housing divider 2 may be tilted, for instance, in a flow direction. Alternatively, the middle housing divider 2 may be parallel to the x-y plane, i.e. perpendicular to the z-axis.

A small portion of the battery cell may be located outside the upper chamber UC and/or outside the bottom chamber BC.

The top cover 3 is positioned in proximity of the upper side of the housing 11 and is configured to receive the terminal ends of the plurality of battery cell. For instance, the top cover 3 is configured to receive the battery terminals 110 and 100. The top cover 3 may for instance have a form suitable to receive the terminal 110 and may be configured to form the battery module by closing the housing 11 so that the housing 11 and the top cover 3 together enclose the plurality of battery and the middle housing divider 2.

As it will be readily apparent to those of ordinary skill in the art the battery module may comprise elements additional to those described above and additional to those depicted in the figures. For instance, the battery module may include additional battery cell holders and electrodes to electrically connect the battery cells one with another and create a current path to an outside of the battery module.

The cell holders may be configured to create additional sealed chambers according to the principles of the present disclosure.

According to some embodiments of the present disclosure, the housing 11 may also comprise outlet and inlet ports to let a coolant fluid flow in the housing 11. For instance, the housing 11 may comprise at least one outlet port and at least one inlet port.

The plurality of battery cells is adhered to the middle housing divider 2 and, additionally, may also be adhered to the top cover 5 so as to seal the upper and the bottom chamber and fix the battery cells in place, i.e. fix the battery cells on the middle housing divider 2.

The sealing of the chambers of the battery module and the fixing of the battery cell may be achieved by employing a same adhesive material.

The adhesion may be achieved by potting the potting material on the middle housing divider 2 between the battery cells 1. Alternatively, the adhesion may be achieved by providing another adhesive material, as for instance glue, on the middle housing divider 2 between the battery cells. For instance, epoxy, polyurethanes, silicones and hybrid materials may be used.

Taking further the potting material as an example, it may be possible to pot all the free area (or substantially all the free area) of the middle housing divider 2 so as to provide a sealing between the bottom chamber BC and the upper chamber UC. All the free area of the middle housing divider 2 means all the area of the middle housing divider 2 which is not physically occupied by the battery cells 1. This includes for instances all the interstices between battery cells 1 as well as between battery cells 1 and the walls of the housing 11.

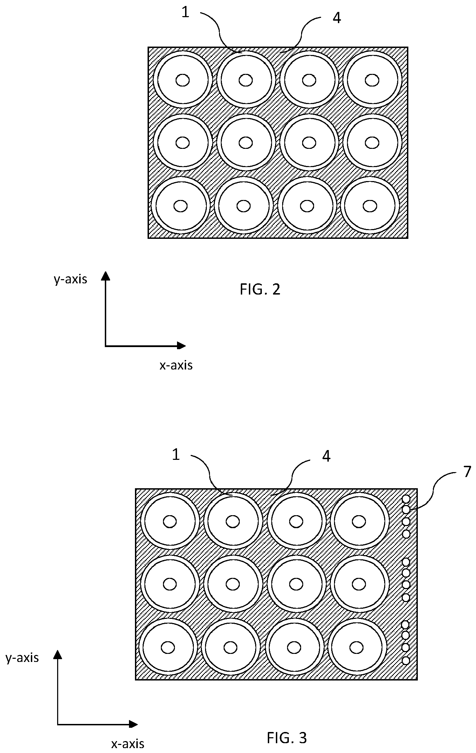

This configuration is also shown in FIG. 2 which shows a middle housing divider fully covered by a layer of potting material 4 in the plane defined by the x-axis and y-axis (strip filling in the figure).

Similarly, it may be possible to pot, or adhere, all the free area or substantially all the free area on the top cover 5. All the free area of the top cover 5 means all the area of the top cover 5 which is not physically occupied by the battery cells 1. This includes for instances all the interstices between battery cells 1 as well as between battery cells 1 and the walls of the housing.

FIG. 1C shows a battery module according to the present disclosure wherein the housing 11 comprises a battery coolant 20. The coolant 20 may traverse the bottom chamber BC and the upper chamber UC separately.

The battery coolant 20 of the upper chamber UC, according to the designed, predetermined, flow path, may be supposed to not enter in contact with the battery coolant 20 of the bottom chamber BC. Alternatively, the battery coolant 20 of the upper chamber may be supposed to enter in contact with the battery coolant 20 of the bottom chamber BC only in predetermined portions of the battery module. These predetermined portions may for instance be dedicated conduits between the upper chamber UC and bottom chamber BC. These dedicated conduits may be for instance openings provided in the middle housing divider 2. The openings 7 allow the battery coolant 20 to flow from one chamber to another chamber.

For instance, the middle housing divider 2 may be provided with at least one opening 7. However, the middle housing divider may also be provided with a plurality of openings as shown in FIG. 3.

The at least one opening 7 may be placed on an outer region of the middle housing divider, for instance between a row of battery cells 1 and a lateral wall of the housing 11.

In this configuration the middle housing divider 2 may be potted with potting material on all the free area with the exception of the at least one opening 7. Additionally, in case there is a plurality of openings the middle housing divider 2 may be potted with potting material on all the free area with the exception of the plurality of openings 7.

This configuration makes it possible to seal the middle housing divider 2 and fix the battery cells 1 while at the same time ensuring that the cooling fluid 20 flows according to the predetermined path within the battery module.

The battery cells 1 may be connected to the bottom of the housing. The connection with the bottom of the housing may be achieved for instance by gluing the plurality of battery cells 1 to the bottom of the housing.

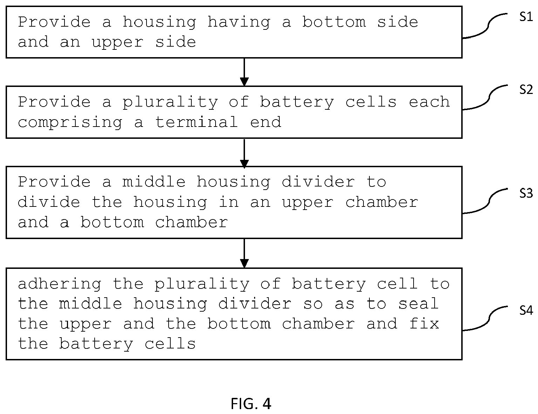

Fig. 4 shows a method of manufacturing a battery module.

The method of manufacturing a battery module comprising the step of providing S1 a housing having a bottom side and an upper side. The method also comprises the step of providing S2 a plurality of battery cells each comprising a terminal end. If further comprises the step of providing S3 a middle housing divider in the housing to divide the housing in an upper chamber and a bottom chamber. The middle housing divider comprising a plurality of cell openings configured to receive a respective battery cell of the plurality of battery cells so that a first portion of the battery cell is in the upper chamber and a second portion of the battery cell is in the bottom chamber. Finally, the method comprises the step of adhering (S4) the plurality of battery cell to the middle housing divider so as to seal the upper and the bottom chamber and fix the battery cells.

Additionally, the method may comprise the steps of providing S5 a top cover positioned in proximity of the upper side of the housing and configured to receive the terminal ends of the plurality of battery cell. It may also comprise the step of adhering S6 the plurality of battery cell to the top cover so as to seal the upper and the bottom chamber and fix the battery cells.

## Claims

1. A battery module comprising:
- a housing having a bottom side and an upper side;
- a plurality of battery cells each comprising a terminal end;
- a middle housing divider configured to divide the housing in an upper chamber and a bottom chamber, the middle housing divider comprising a plurality of cell openings configured to receive a respective battery cell of the plurality of battery cells so that a first portion of the battery cell is in the upper chamber and a second portion of the battery cell is in the bottom chamber;
wherein the plurality of battery cells is adhered to the middle housing divider so as to seal the upper chamber and the bottom chamber and fix the battery cells.

2. The battery module of claim 1 further comprising:
- a top cover positioned in proximity of the upper side of the housing and configured to receive the terminal ends of the plurality of battery cell;
wherein the plurality of battery cells is adhered to the to the top cover.

3. The battery module of claim 2,
wherein each battery cell of the plurality of battery cells is potted on the middle housing divider and on the top cover.

4. The battery module of claim 2,
wherein each battery cell of the plurality of battery cells is connected to the bottom side of the housing.

5. The battery module of claim 3,
wherein all or substantially all the free area of the middle housing divider and the top cover is potted with potting material.

6. The battery module of claim 3 to 5,
wherein the middle housing divider comprises at least one opening configured to allow a battery coolant to flow from one chamber to another;
wherein all the free area of the middle housing divider except the at least one opening is potted with potting material.

7. The battery module of claim 1,
wherein the plurality of battery cell is adhered to the middle housing divider and to the top cover with adhesive material.

8. The battery module of any one of the preceding claims,
wherein the plurality of battery cells is glued to the bottom side of the housing.

9. A method of manufacturing a battery module comprising the steps of:
- providing (S1) a housing having a bottom side and an upper side;
- providing (S2) a plurality of battery cells each comprising a terminal end;
- providing (S3) a middle housing divider in the housing to divide the housing in an upper chamber and a bottom chamber, the middle housing divider comprising a plurality of cell openings configured to receive a respective battery cell of the plurality of battery cells so that a first portion of the battery cell is in the upper chamber and a second portion of the battery cell is in the bottom chamber;
- adhering (S4) the plurality of battery cell to the middle housing divider so as to seal the upper and the bottom chamber and fix the battery cells.

10. The method of manufacturing a battery module of claim 9
- providing (S5) a top cover positioned in proximity of the upper side of the housing and configured to receive the terminal ends of the plurality of battery cell;
- adhering (S6) the plurality of battery cell to the top cover so as to seal the upper and the bottom chamber and fix the battery cells.
